# EUROPEAN PATENT SPECIFICATION

(11) **EP 1 985 513 B1**
(45) Date of publication and mention of the grant of the patent: **13.10.2010**
(21) Application number: 07107004.9
(22) Date of filing: 26.04.2007
(51) Int. Cl.: B60S 1/52

(54) **Windscreen wiper arm**
Scheibenwischerarm
Bras d'essuie-glace

(43) Date of publication of application: 29.10.2008
(73) Proprietor: Federal-Mogul Ignition Srl, 20122 Milano (IT)
(72) Inventor: Marcati, Maurizio, 10040, Druento (IT); Tilaro, Valter, Torino (IT)
(74) Representative: Hooiveld, Arjen Jan Winfried

(56) References cited:
- EP-A- 1 520 759
- WO-A-02/02378
- DE-A1-102004 007 351
- FR-A1- 2 783 225
- US-B1- 6 286 174

## Description

The present invention relates to a windscreen wiper arm, particularly for automobiles, comprising a mounting head on a drive shaft, an arm member pivotally connected to said mounting head, and at least one washing nozzle connected to a supply of a washing medium, wherein said washing nozzle is provided on said arm member near the location of its connection to a wiper blade. Said arm member is pivotally connected to the mounting head usually by means of a pivot pin, wherein the arm member has a substantially U-shaped cross-section near said pivot pin comprising two side walls, wherein a part of the mounting head extends between the side walls and beyond said pivot pin, and wherein a spring is hooked with its first end on a pin on the mounting head.

Such a windscreen wiper arm is known from German patent publication no. 10 2004 007 351 (Volkswagen AG). This known windscreen wiper arm comprises a rod and a so-called adapter as part of a connection device for a wiper blade, wherein side walls of said adapter are locally folded around said rod. The washing nozzles are an integrated part of the adapter. The rod is internally equipped with channels for supplying a washing liquid from a reservoir to the washing nozzles, so that said washing liquid may be sprayed on a windscreen of an automobile, for example, in a direction sidewards from the wiper blade.

A disadvantage of the windscreen wiper arm known from the above German patent publication no. 10 2004 007 351 is that the windscreen wiper arm as a whole has to be dismounted from an automobile in case of maintenance, for example if the washing nozzles of the adapter have to be unclogged. Furthermore, the windscreen wiper arm has to be replaced in its entirety in the event that the washing nozzles of the adapter are worn, for example.

It is an object of the invention to obviate these disadvantages in the sense that at minimum costs - without using complex machinery and additional tools - a simple windscreen wiper arm is proposed, without the need to dismount or replace the windscreen wiper arm as a whole in case the wshing nozzle needs to be repaired or replaced. It is noted that the present invention is not restricted to cars, but also refers to rail coaches and other (fast) vehicles.

In order to accomplish that objective a windscreen wiper arm of the type mentioned in the introduction is characterized according to the invention in that said washing nozzle is connected to said arm member through a snapping operation, wherein said washing nozzle and said arm member are provided with mutually cooperating protrusion/hole means for snappingly connecting said washing nozzle to said arm memberwherein said arm member has an at least substantially U-shaped cross-section at the location of its connection to said wiper blade, and wherein said washing nozzle and a base /leg of said U-shaped cross-section of said arm member are provided with said mutually cooperating protrusion/hole means, wherein said base and/or said leg of said U-shaped cross-section of said arm member are/is provided with at least one outwardly extending protrusion for snappingly engaging into a recess of said washing nozzle, wherein said protrusion is stamped out of the material of said arm member. This enables to detachably connect said washing nozzle to said arm member. Stamping out said protrusion ensures that said protrusion can be manufactured in a controlled and reliable manner. Less constructional parts for mounting the washing nozzle on the arm member are therefore needed.

In a preferred embodiment of a windscreen wiper arm in accordance with the invention a wall of said washing nozzle surrounding said recess is resilient so that said wall is able to pivot about a hinge axis for snappingly connecting said washing nozzle to said arm member. Preferably, said resilient wall can pivot about said hinge axis between a first position for mounting or dismounting said protrusion of said arm member in or from said recess of said washing nozzle, and a second position for connecting said washing nozzle to said arm member.

In another preferred embodiment of a windscreen wiper arm in accordance with the invention said base and/or said leg of said U-shaped cross-section of said arm member are/is provided with a hole for said supply of said washing medium.

German patent publication no. 34 33 106 (SWF Auto-Electric GmbH) describes an arm member being connected to a wiper rod, wherein one end of the wiper rod extends inside the U-shaped cross-section of the arm member. The side walls of the arm member are locally folded around the wiper rod, while a holder is folded around said end of the rod. The spring of this prior art windscreen wiper arm is hooked with its first end on the pin on the mounting head and with its second end on two eyes of the holder. In a windshield wiper arm according to the invention said spring is preferably hooked with its second end on the arm member. In other words, by connecting the spring directly to the arm member less raw material is used, while additional tooling steps are avoided.

United States patent publication no. 6,286,174 (Zimmer) refers to a windscreen wiper arm according to the preamble of claim 1, wherein the washing nozzle is snappingly connected.

The invention will now be explained in more detail with reference to figures illustrated in a drawing, wherein:
- Figures 1 and 2 are perspective, schematic views of a windshield wiper device according to the invention of the "yokeless" type, wherein the windscreen wiper arm is in a wiping position (figure 1) and in a mounting position (figure 2), respectively;
- Figure 3 shows a detail of the windscreen wiper device of figures 1 and 2;
- Figure 4 is a bottom view of the windscreen wiper arm of figures 1 and 2;
- Figures 5 and 6 are a bottom view and a top view, respectively, of a windscreen wiper arm according to another embodiment of the invention to be used in a windscreen wiper device of the type of figures 1 and 2; and
- Figures 7 through 11 show several embodiments of a snap connection of a washing nozzle in accordance with the invention.

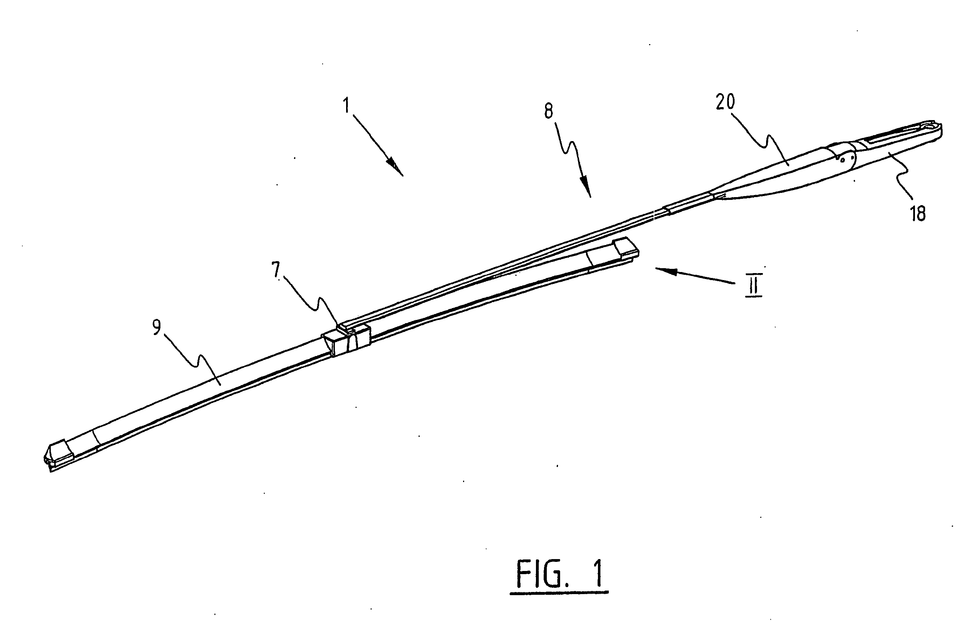

Figure 1 through 4 show a windscreen wiper device 1 according to the prior art. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biased in a curved position (the curvature in operative position being that of a windscreen to be wiped). Neighbouring ends 5 of strips 4 are interconnected on either side of the windscreen wiper device 1 by means of connecting pieces 6. The windscreen wiper device 1 is further equipped with a connecting device 7 for an oscillating arm 8, and a spoiler 9.

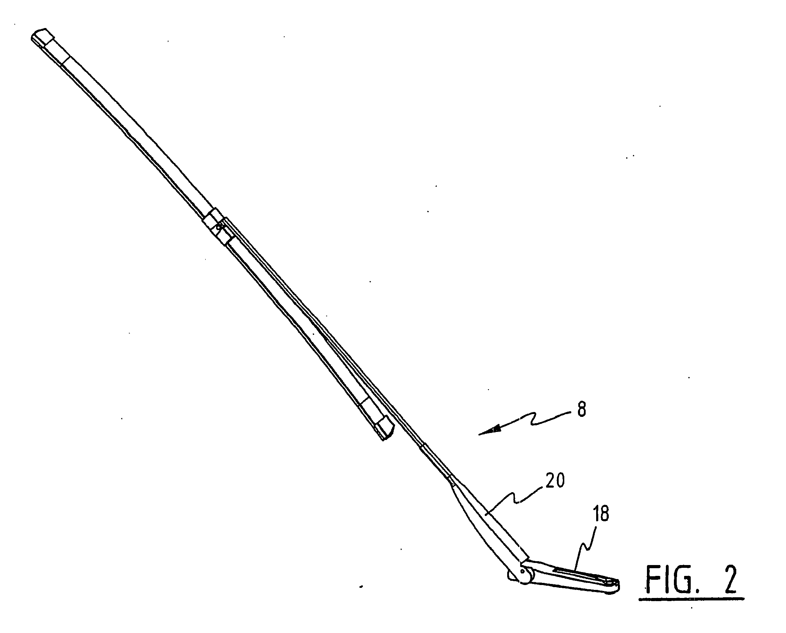

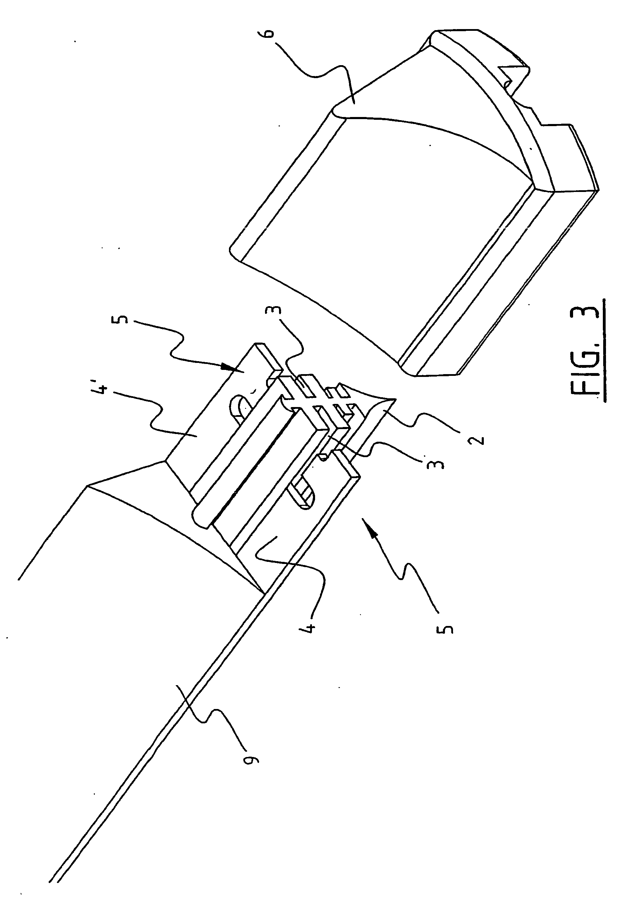

Figures 1 and 2 show the windscreen wiper device 1 in a wiping position and in a mounting position respectively, whereas figure 3 shows a free end of the windscreen wiper device 1 of figure 1.

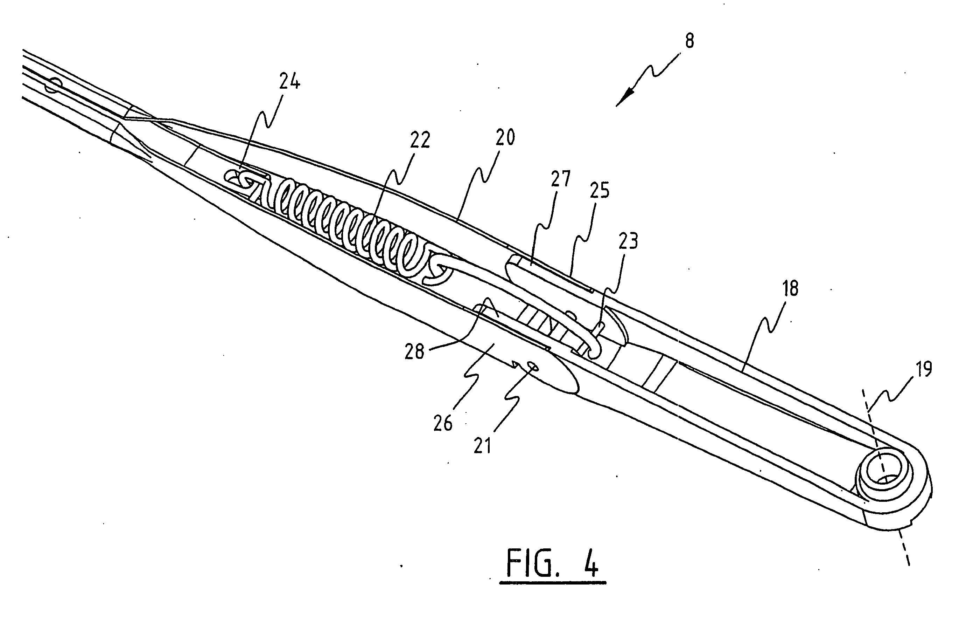

As illustrated in figure 4 the windscreen wiper arm 8 comprises a plastic mounting head 18 which can be fixed for rotation to a shaft 19 driven, via a mechanism not illustrated, by a small motor. Said windscreen wiper arm 8 further comprises a plastic arm member 20 supported by the mounting head 18, wherein said arm member 20 in turn supports the wiperblade 2 with the help of the connecting device 7, as illustrated in figure 1. The arm member 20 is pivotally connected to the mounting head 18 by means of a pivot pin 21. A spring 22 is hooked with its first end on a pin 23 on the mounting head 18 and with its second end on to a wiper rod 24 of the arm 8 in order to ensure that the arm member 20 and thus the wiper blade 2 connected thereto is pressed onto a windscreen to be wiped. In use, the shaft 19 rotates alternately in a clockwise and in a counter-clockwise sense carrying the mounting head 18 into rotation also, which in turn draws the arm member 20 into rotation and by means of the connecting device 7 moves the wiper blade 2.

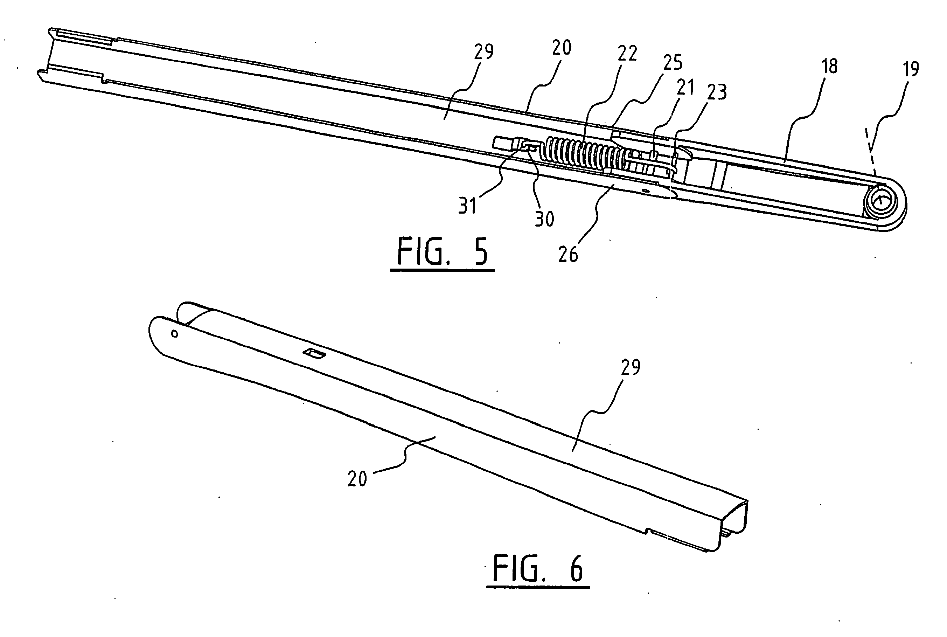

With reference to figures 5 and 6 according to another embodiment of the invention a spring 22 is accommodated in a metallic arm member 20, wherein said spring 22 is hooked with its first end on a pin 21 of a mounting head 18 of the type shown in figures 1, 2 and 4, and wherein said spring 22 is hooked with its second end on a base 29 of the U-shaped cross-section of the arm member 20. Particularly, said spring 22 is hooked with its second end on a lip 30 of said base 29. Said lip 30 is bent inwardly, i.e. away from said base 29. More in particular, said spring 22 is hooked with its second end into a hole 31 provided in said lip 30. Parts in figures 5 and 6 that correspond to those of figure 4 are designated with the same reference numerals.

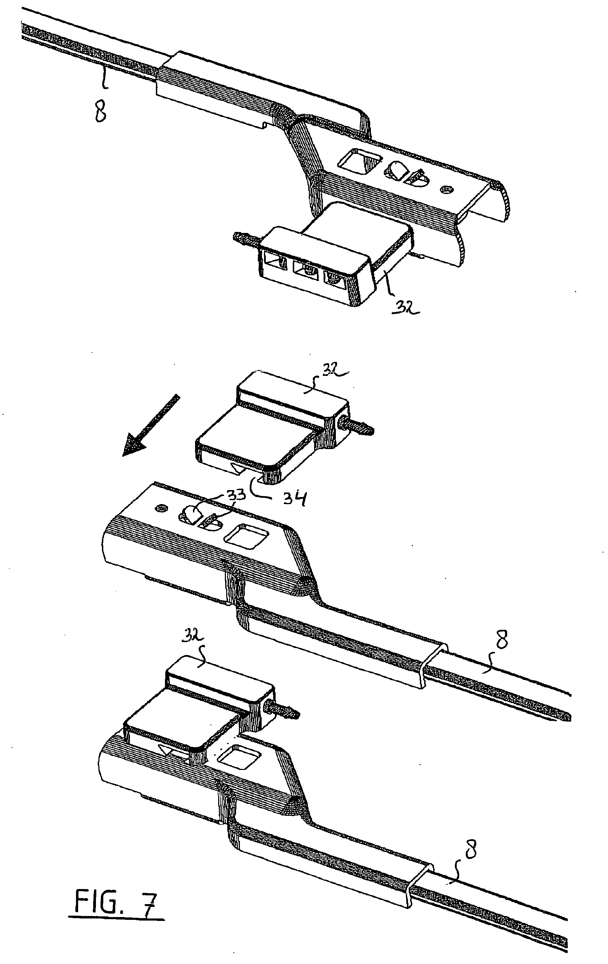

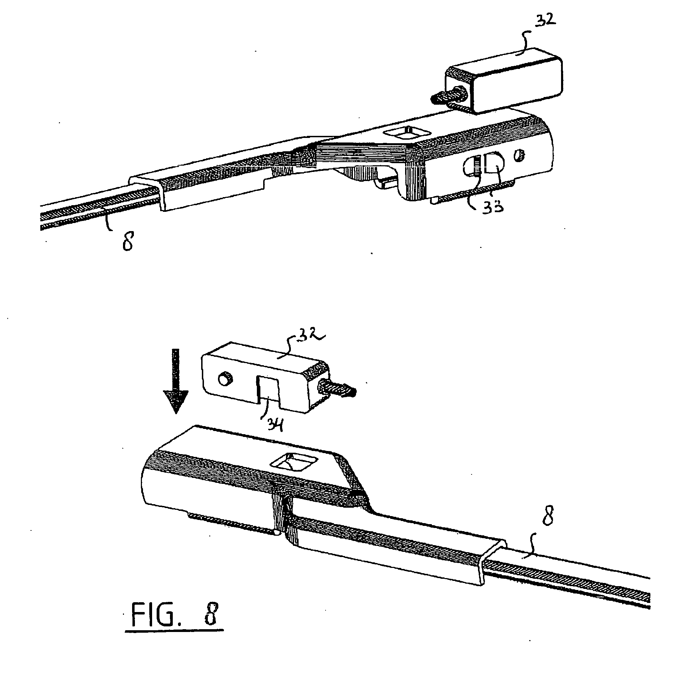

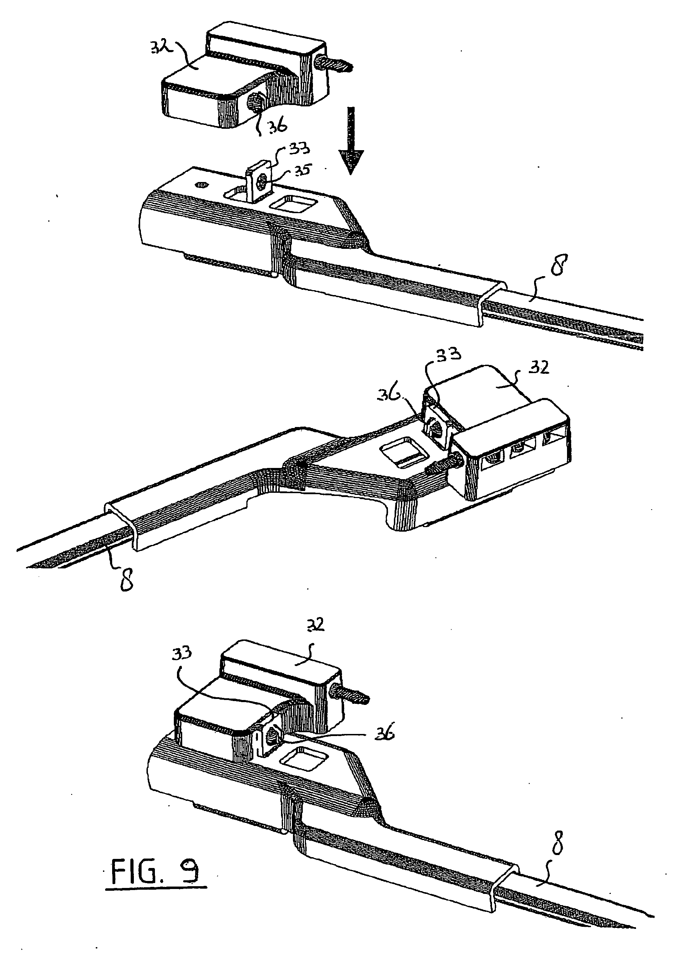

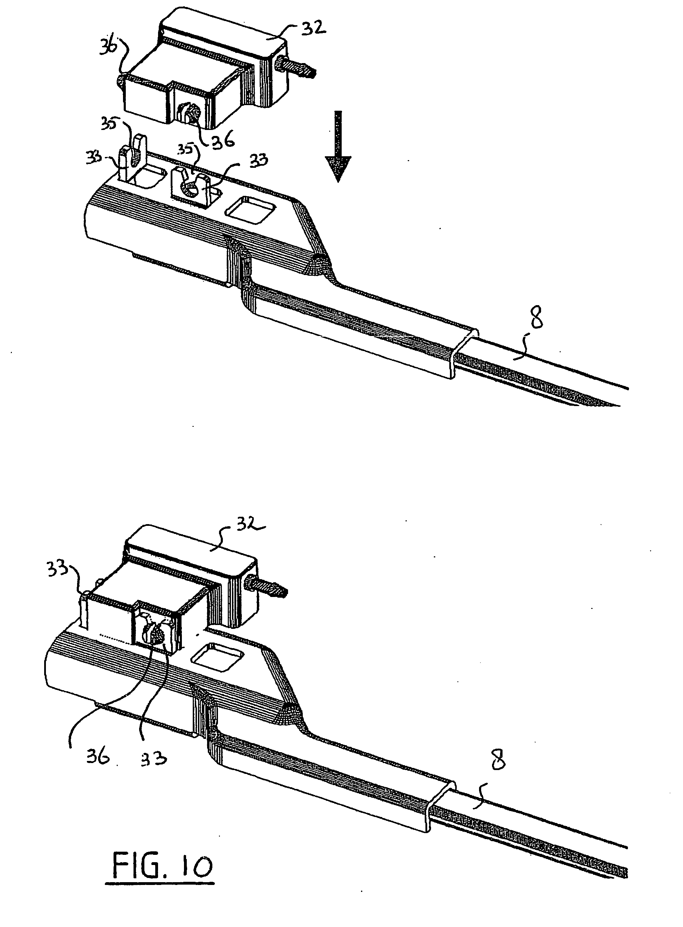

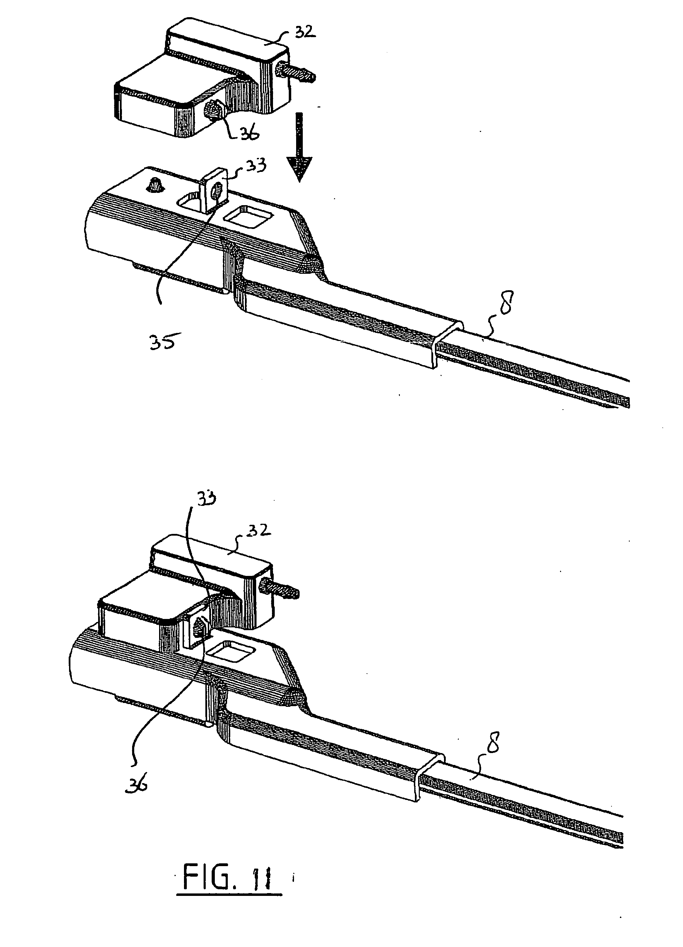

Figures 7 through 11 each show a different embodiment of a snap connection of a washing nozzle 32 according to the invention with a free end of said oscillating arm 8. Use is made of protrusions 33 stamped out of the material of said arm 8 for snappingly engaging into a recess 34 of said washing nozzle 32 (figures 7 and 8). In the alternative, a stamped out protrusion 33 with a hole 35 is provided, wherein a protrusion 36 on the washing nozzle 32 is snappingly received by said hole 35 (figures 9, 10 and 11).

The invention is only restricted by the scope of the appended claims.

## Claims

1. A windscreen wiper arm (8), particularly for automobiles, comprising a mounting head (18) on a drive shaft (19), an arm member (20)pivotally connected to said mounting head (18), and at least one washing nozzle (32) connected to a supply of a washing medium, wherein said washing nozzle (32) is provided on said arm member (20) near the location of its connection to a wiper blade (2), wherein said washing nozzle (32) is connected to said arm member (20) through a snapping operation, wherein said washing nozzle (32) and said arm member (20) are provided with mutually cooperating protrusion/hole means (33, 34; 33, 35, 36) for snappingly connecting said washing nozzle (32) to said arm member (20), wherein said protrusion is stamped out of the material of said arm member (20), **characterised in that** said arm member (20) has a U-shaped cross-section at the location of its connection to said wiper blade (2), and wherein a base (29) and/or a leg of said U-shaped cross-section of said arm member (20) are/is provided with at least one outwardly extending protrusion (33) for snappingly engaging into a recess (34) of said washing nozzle (32).

2. A windscreen wiper arm (8) according to claim 1,
wherein a wall of said washing nozzle (32) surrounding said recess (34) is resilient so that said wall is able to pivot about a hinge axis for snappingly connecting said washing nozzle (32) to said arm member (20).

3. A windscreen wiper arm (8) according to claim 2,
wherein said resilient wall can pivot about said hinge axis between a first position for mounting or dismounting said protrusion (33) of said arm member (20) in or from said recess (34) of said washing nozzle (32), and a second position for connecting said washing nozzle (32) to said arm member (20).

4. A windscreen wiper arm (8) according to claim 1, 2 or 3, wherein said base (29) and/or said leg of said U-shaped cross-section of said arm member (20) are/is provided with a hole for said supply of said washing medium.

## Patentansprüche

1. Scheibenwischerarm (8) insbesondere für Automobile, enthaltend einen Anbringungskopf (18) auf einer Antriebswelle (19), ein Armelement (20), das schwenkbar mit dem Anbringungskopf (18) verbunden ist, und wenigstens eine Waschdüse (32), die mit einem Vorrat eines Waschmediums verbunden ist, wobei die Waschdüse (32) an dem Armelement (20) in der Nähe der Verbindungsstelle desselben mit einem Wischerblatt (2) vorgesehen ist, die Waschdüse (32) mit dem Armelement (20) durch einen Rastvorgang verbunden ist, die Waschdüse (32) und das Armelement (20) mit wechselseitig zusammenwirkenden Vorsprungs-/Locheinrichtungen (33, 34; 33, 35, 36) versehen sind, die die Waschdüse (32) mit dem Armelement (20) durch Einrasten verbinden, und der Vorsprung aus dem Material des Armelementes (20) ausgestanzt ist, **dadurch gekennzeichnet, dass** das Armelement (20) einen U-förmigen Querschnitt an seiner Verbindungsstelle mit dem Wischerblatt (2) hat, wobei eine Basis (29) und/oder ein Schenkel des U-förmigen Querschnittes des Armelementes (20) mit wenigstens einem sich nach außen erstreckenden Vorsprung (33) versehen sind/ist, der rastend in eine Aussparung (34) der Waschdüse (32) eingreift.

2. Scheibenwischerarm (8) nach Anspruch 1, bei dem eine Wand der Waschdüse (32), die die Aussparung (34) umgibt, elastisch ist, so dass die Wand in der Lage ist, um eine Gelenkachse zu schwenken, um eine Rastverbindung von Waschdüse (32) und Armelement (20) herzustellen.

3. Scheibenwischerarm (8) nach Anspruch 2, bei dem die elastische Wand um die Gelenkachse zwischen einer ersten Stellung zum Anbringen oder Lösen des Vorsprungs (33) des Armelementes (20) in oder aus der Aussparung (34) der Waschdüse (32) und einer zweiten Stellung zum Verbinden der Waschdüse (32) mit dem Armelement (20) schwenken kann.

4. Scheibenwischerarm (8) nach Anspruch 1, 2 oder 3, bei dem die Basis (29) und/oder der Schenkel des U-förmigen Querschnittes des Armelementes (20) mit einem Loch für die Zufuhr des Waschmediums versehen sind/ist.

## Revendications

1. Bras d'essuie-glace (8), en particulier pour automobiles, comprenant une tête de montage (18) sur un arbre d'entraînement (19), un élément de bras (20) raccordé à pivotement à ladite tête de montage (18) et au moins une buse de lavage (32) raccordée à une alimentation en agent de lavage, dans lequel ladite buse de lavage (32) est disposée sur ledit élément de bras (20) à proximité de l'emplacement de son raccordement à un bras d'essuie-glace (2), dans lequel ladite buse de lavage (32) est raccordée audit élément de bras (20) par une opération d'encliquetage, dans lequel ladite buse de lavage (32) et ledit élément de bras (20) sont munis de moyens à saillie/orifice (33, 34 ; 33, 35, 36) coopérant mutuellement destinés à raccorder par encliquetage ladite buse de lavage (32) audit élément de bras (20), dans lequel ladite saillie est estampée dans le matériau dudit élément de bras (20), **caractérisé en ce que** ledit élément de bras (20) a une section transversale en U à l'emplacement de son raccordement audit bras d'essuie-glace (2) et **en ce que** une base (29) et/ou une jambe de ladite section transversale en U dudit élément de bras (20) est ou sont munies d'au moins une saillie (33) s'étendant vers l'extérieur destinée à s'engager par encliquetage dans un évidement (34) de ladite buse de lavage (32).

2. Bras d'essuie-glace (8) selon la revendication 1, dans lequel une paroi de ladite buse de lavage (32) entourant ledit évidement (34) est élastique de sorte que ladite paroi soit à même de pivoter autour d'un axe d'articulation en vue du raccordement par encliquetage de ladite buse de lavage (32) audit élément de bras (20).

3. Bras d'essuie-glace (8) selon la revendication 2, dans lequel ladite paroi élastique peut pivoter autour dudit axe d'articulation entre une première position en vue du montage ou du démontage de ladite saillie (33) dudit élément de bras (20) dans ledit évidement (34) de ladite buse de lavage (32) et une seconde position en vue du raccordement de ladite buse de lavage (32) audit élément de bras (20).

4. Bras d'essuie-glace (8) selon la revendication 1, 2 ou 3, dans lequel ladite base (29) et/ou ladite jambe de ladite section transversale en U dudit élément de bras (20) est ou sont munies d'un orifice en vue de ladite alimentation en dit agent de lavage.
